Europäisches Patentamt

European Patent Office

Office européen des brevets

(11) Publication number: **0 310 987 B1**

# EUROPEAN PATENT SPECIFICATION

(45) Date of publication of patent specification: **13.05.92**  (51) Int. Cl.⁵: **A01C 15/18**, A01C 7/16

(21) Application number: **88116308.3**

(22) Date of filing: **02.10.88**

(54) **Volumetric dosage distributor with carrier belt for pulverized and granular substances.**

(30) Priority: **06.10.87 IT 4574587**

(43) Date of publication of application:
**12.04.89 Bulletin 89/15**

(45) Publication of the grant of the patent:
**13.05.92 Bulletin 92/20**

(84) Designated Contracting States:
**DE ES FR GB GR**

(56) References cited:
**US-A- 2 758 756
US-A- 2 797 028
US-A- 2 913 150
US-A- 3 268 121**

(73) Proprietor: **MATERMACC s.r.l.**
**Viale Ponte Rosso, 35**
**I-33078 San Vito al Tagliamento (PN)(IT)**

(72) Inventor: **Fiorido, Antonino**
**Viale Madonna di Rosa, 6**
**I-33078 San Vito Al Tagliamento (PN)(IT)**

(74) Representative: **Giugni, Valter**
**PROPRIA S.r.l., Via Mazzini 13**
**I-33170 Pordenone(IT)**

Rank Xerox (UK) Business Services
(3.08/2.19/2.0)

## Description

### FIELD OF APPLICATION

The object of the present invention is a voumetric dosage distributor operating with a carrier belt for distributing powedered and granular products in regulated doses and has manifold applications in the manufacturing of machinery for the agricultural field. This distributor allows insecticides, weed killers, fertilizers seeds and other products, being either in powdered or granular form, to be metered and distributed correctly.

The volumetric dosage distributor can be put to use both in the manufacturing of simple agricultural machinery, such as fertilizer distributors, sowing machines, granule applicators, etc., and in the construction of combined agricultural machinery like combined weeding and manure spreading machines, precision sowing and fertilizer drills plus granule applicators, etc, and is also advantageous to those machines which require a correct and regulated volumetric distribution of products in the powder or granular state.

### STATE OF PRIOR ART

There are several known gravitational and volumetric distributors and metering devices for powdered and granular products.

In the first instance the quantity of products distributed does not change proportionally with the variation of the feeding motion.

There are several types of volumetric metering distributors such as:

- dosage distributors based on horizontally axed rollers or cylinders;
- dosage distributors based on vertically or slantwise axed rollers or cylinders;
- dosage distributors operating by means of conveyor belts with horizontally axed rollers;
- dosage distributors based on spiral or similar feeding screws.

US-A-3,268,121 discloses a spreader apparatus including a bin for receiving the material to be dispensed and provided with a lower outlet through which the material flows on a underlaying belt. Therefore, the material is charged on the belt from above and across the whole width of the belt. Said U.S. patent does not show an adjustable volumetric control, but only simple means for adjusting the outlet depending on the various character of the material to be dispensed.

Moreover, the rate at which the material is dispensed is controlled by selecting the diameter portions of the pulleys, i.e. changing the speed of the belt. This is a serious drawback both from the constructive point of view (due to the complication of a speed changing device) and from the functional one (because the dispensing rate cannot be constantly maintained, being dependent from the travelling rate of the belt). At last, said US patent can deliver the material through only one discharge outlet, due to the horizontal development of the belt, and needs a separate seeder, resulting in a not multifunctional apparatus contrary to that of the present invention and the trend of modern apparatuses.

US-A-2,758,756 does not disclose a volumetric dosage distributor, but a single feeder of seeds having proper sizes.

The distributing element is an endless chain, on which feed members are pivotally and detachably connected, forming pockets for receiving the seed to be delivered. On each side of the hopper there is provided a removable filler bar, the principal purpose of which is to adapt the seeding device to various grain sizes. Therefore, various sizes of the grains require different feed members and filler bars to be selected and replaced. This is a clear and serious drawback overcome by the present invention.

US-A-2,913,150 is a fertilizer distributor, which also lacks a volumetric dosage. Indeed, the fertilizer will freely move through the large passage from the hopper and will discharge onto the whole surface of the horizontal surface of an apron. The arcuately shaped gate, actuated by control means, can only roughly limit the thickness of product on the apron towards the discharge.

It is proved that the amount of delivered product, under the same adjustment of the gate, varies depending on the characteristics of the product and on the speed of the apron; indeed, the faster the apron, the less product is delivered.

All these types of distributors and metering devices are often structurally complicated. The same applies for the variation of the quantity to be distributed, as they must change the gear ratio, which means a more complicated mechanical system.

There are other limitations such as the irregular distribution, the accelerated wear out of some spare parts, the limitation in controlling the speed of distribution and therefore in the overall working performance of the equipment. Therefore, with regard to the present technical field it is difficult to obtain a proper and satisfactory distribution of powdered or granular products with dosage distributors that are structurally simple and easy to control and adjust.

## DESCRIPTION

It is the purpose of the present finding to overcome the disadvantages connected with prior art devices by providing a dosage distributor structurally simple, easy to adjust and very accurate on the distribution of granular or powdered products.

The purpose of this finding is achieved in a volumetric dosage distributor metering both powdered and granular products in quantities proportional to the number of revolutions of the drive axle, according to a dosage that can be adjusted without interferring with the transmission gear, capable of supplying one or two or more outlets, either with equal or different dosages for each individual outlet.

The quantity of material distributed is established by the position of the adjusting bulkhead.

The device according with the finding, is formed by a casing on which rollers are rotatably mounted; along these rollers travels a conveyor belt with grooves, recesses or holes: the products to be distributed fall from the hopper onto the conveyor belt through opening, while their flow or dosage is controlled by the bulkheads.

The adjustment and control of the bulkheads can be arranged by means of one or more graduated sticks, spiral, screw or other systems.

The conveyor belt with its movement, which can be effected over one of the rollers either by direct drive or by means of bevel gears or any other transmission system, displaces the thereby adjusted volume of products from the loading sector through to the individual outlets, where the products are discharged by gravity. The movement of the conveyor belt is obtaining by drive rollers, therefore the distributed quantity is constant for every revolution of said rollers, regardless of the speed of the latter.

The surface over which the product is rolling to fill up the belt may have advantageously an inclination close to the rolling slope of the products to be distributed, in order to obtain a certain proportion between the opening of the bulkhead and the distributed dose.

The dosage distributor with conveyor belt can be installed either internally or externally to the hopper containing the products to be distributed and may have the loading and the unloading of these products on one side only, or on more sides along the running path of the conveyor belt.

The loading and the unloading may be carried out internally or externally of the conveyor belt, or else by means of a perforated belt, loading may occur internally and unloading externally or vice-versa.

The outlets may be provided with an overflow arrangement.

According to the finding, a single conveyor belt may be loaded at one, two or more points and feed as many outlets with the peculiarity that all of the grooves or beds along the whole length of the belt are feeding all of the outlets.

Claim 1 clearly defines the characteristic features of the present invention and refers in the pre-characterizing part to the prior art represented by the US-A-3,268,121.

## DESCRIPTION OF THE DRAWINGS

To illustrate an embodiment of the present finding by way of non-limiting example, a drawing is attached herewith, in which: Figure 1 is a vertical section of the volumetric dosage distributor with conveyor belt according to the finding; Figure 2 is a cross-sectional view of the above mentioned volumetric dosage distributor; Figure 3 is a plan view of the volumetric dosage distributor with conveyor belt.

## EMBODIMENT OF THE FINDING

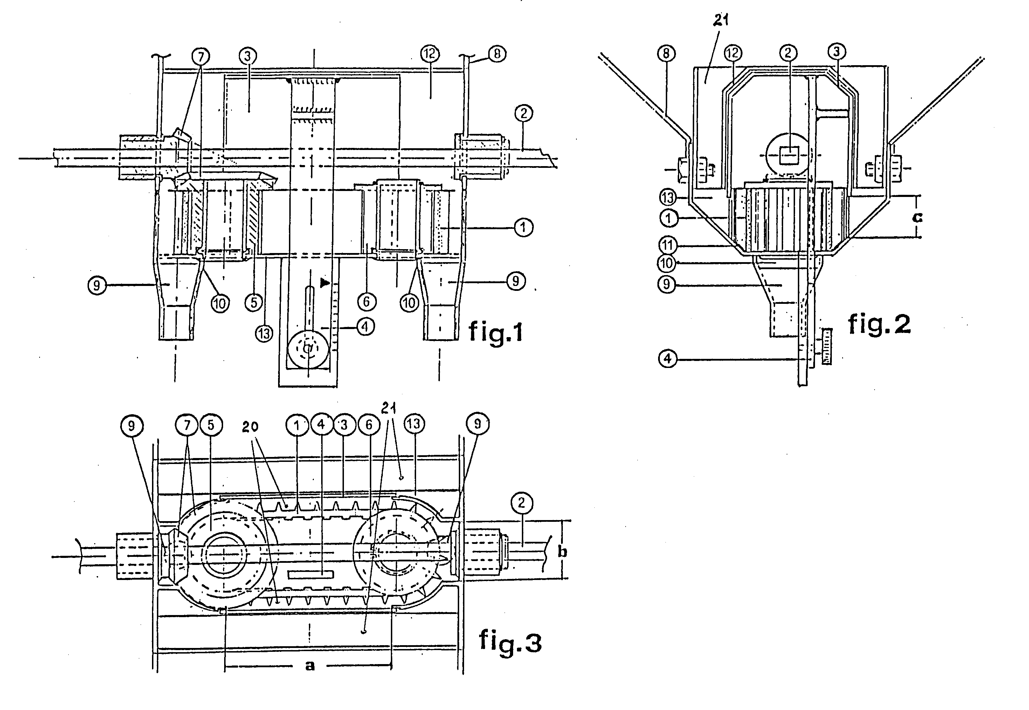

With reference to figures 1, 2 and 3,a volumetric dosage distributor with conveyor belt for powdered and granular products is shown, ensuring any adjustable quantity proportional to the number of revolutions of the driving axle.

The dosage distributor is connected to the hopper (8) containing the products to be distributed: in this particular case it is situated inside the hopper; alternatively it may be placed outside.

The dosage distributor consists of a casing (13) with at least a lateral chamber (21), on which the rollers (5) and (6) are rotatably mounted, around which is moving a conveyor belt (1) with side recesses (20) which however may be replaced by inclined grooves, holes, etc.

The conveyor belt may consist of modular conveying elements mounted on a belt, chain or band.

The conveyor belt (1) moves over the rollers (5) and (6) which in the present embodiment are toothed, but could be plain and smooth, and is driven by the rotation of the shaft (2) through the bevel gear (7) driving the roller (5).

The drive shaft (2) may run either internally or externally of the hopper (8).

The adjustment of the dose of product to be distributed is made by varying the position of the bulkhead (3) which in this case is a single one and therefore allows simultaneous adjustment of all outlets of the distributor; alternatively it is possible to use an adjustment bulkhead for each outlet.

The setting of the bulkhead may be done by means of a graduated stick or rod (4) or by a screw, spiral or any other suitable system. The adjustment in this described embodiment is made only at one point, but it may be done at several points, for example at the ends of the bulkhead.

The surface (11) over which the product to be filled onto the conveyor belt is running, may advantageously have an inclination close to the rolling inclination of the product to be distributed, in order to have a better proportionality between the setting of the bulkhead and the amount to be distributed.

The product to be distributed is discharged by gravity from the conveyor belt at the outlets (9), where the discharge headers are located, in proximity of which an overflow opening (10) may be provided in order to avoid any obstruction of the outlets due to overfilling.

Consequently the conveyor belt (1) driven by the rotating shaft (2) carries the product to be distributed from the loading area (a) to the unloading area (b), the volumetric adjustment of the quantity is provided by the change in the opening (c) obtained by shifting the bulkhead.

If the distributor is placed inside the hopper, a properly shaped cover (12) may be placed upon the adjustment bulkhead in order to protect the transmission gear and the outlets.

## Claims

1. A volumetric dosage distributor for powdered and granular products to be used in connection with agricultural machines, comprising a hopper (8) discharging the products on conveyor means (1), said conveyor means are formed by an endless belt (1) with recesses on its surface and the conveyor means being activated through control means (2,5-7), and steplessly adjustable adjusting means (3) for feeding the flow of the products towards the conveyor means, characterized in that the surface of the conveyor means is developing in a substantially vertical plane so that the recesses (20) on the belt are open to the side, said adjusting means (3) are provided for dosing the filling ratio of products in said recesses, independently from the speed of the belt (1).

2. A volumetric dosage distributor according to claim 1, characterized in that at least a lateral chamber (21) is provided between said hopper (8) and said belt (1) for laterally feeding said products into said recesses (20), said adjusting means being formed by at least a bulkhead (3) steplessly slidable in front of said recesses.

3. A volumetric dosage distributor according to claim 1 or 2, characterized in that more than one discharge outlet (9) are provided downstream of said belt (1) for distributing separated doses of said products.

4. A volumetric dosage distributor according to any claim 1 to 3, characterized in that said bulkhead (3) is controlled by a graduated rod (4) which is actuated by a screw knob.

5. A volumetric dosage distributor according to any claim 1 to 4, characterized in that said endless belt (1) is controlled by a pair of rollers (5,6), at least one of said rollers being actuated through a shaft (2) and a pair of a conical gears (7).

## Revendications

1. Distributeur à dosage volumétrique pour des produits en poudre ou granulaires à utiliser en conjonction avec des machines agricoles, comprenant une trémie (8) déversant lesdits produits sur des moyens convoyeurs (1), lesdits moyens convoyeurs étant formés par une bande transporteuse sans fin (1) ayant des poches de transport sur sa surface et lesdits moyens convoyeurs étant entraînés par des moyens de commande (2, 5-7), ainsi que des moyen de réglage (3) réglables en continu pour alimenter le débit de produit à distribuer vers lesdits moyens convoyeurs, **caractérisé en ce que** la surface desdits moyens convoyeurs se développe sur un plan essentiellement vertical de façon telle que les poches de transport (20) sur la bande transporteuse s'ouvrent de côté, lesdits moyens de réglage (3) étant pourvus pour doser les produits dans lesdites poches de transport dans le rapport de remplissage réglé, de façon indépendante de la vitesse d'avancement de la bande transporteuse (1).

2. Distributeur à dosage volumétrique selon la revendication 1, **caractérisé en ce que** au moins une chambre latérale (21) est pourvue entre ladite trémie (8) et ladite bande transporteuse (1) pour alimenter latéralement lesdits produits dans lesdites poches de transport (20), lesdits moyens de réglage étant formés par au moins une cloison (3) coulissante d'une façon continue devant lesdites poches de transport.

3. Distributeur à dosage volumetrique selon la revendication 1 ou 2, **caractérisé en ce que** plusieurs sorties d'écoulement (9) sont pourvues en aval de ladite bande transporteuse (1) pour distribuer des doses séparés desdits produits.

4. Distributeur à dosage volumetrique selon une quelconque des revendications de 1 à 3 précédentes, **caractérisé en ce que** ladite cloison (3) est contrôlée par une tige de réglage (4) qui est commandée par une poignée à vis.

5. Distributeur à dosage volumetrique selon une quelconque des revendications de 1 à 4 précédentes, **caractérisé en ce que** ladite bande transporteuse (1) est commandée par une couple de rouleaux (5, 6), au moins un desdits rouleaux étant entraîné par un arbre (2) et un harnais d'engrenages coniques (7).

**Patentansprüche**

1. Volumetrische Dosiervorrichtung für pulverförmige oder körnige Produkte zur Verwendung in Verbindung mit Ackerbaumaschinen, welche mit einem zum Ausschütten des Austragsprodukts auf dazu bestimmte Fördermittel (1) vorgesehenen Trichter (8), wobei solche Fördermittel (1) aus einem endlosen, mit Fördertaschen an der Oberfläche versehenen Transportband bestehen und durch Antriebsmittel (2, 5-7) angetrieben werden, sowie mit stufenlos regelbaren Stellmitteln (3) zur Regelung der Strömung des Austragsprodukts nach den genannten Fördermitteln hin versehen ist, **dadurch gekennzeichnet,** daß die Oberfläche der genannten Fördermittel sich in einer im wesentlichen Vertikalebene entfaltet, sodaß die genannten Fördertaschen (20) an dem Transportband sich seitlich öffnen, wobei die genannten Stellmittel (3) zur Dosierung des Austragsprodukts gemäß der eingestellten Einfüllmenge in die genannten Fördertaschen auf konstante, von der Laufgeschwindigkeit des Transportbandes (1) ganz unabhängige Weise ausgelegt sind.

2. Volumetrische Dosiervorrichtung nach Anspruch 1, **dadurch gekennzeichnet,** daß wenigstens eine Seitenkammer (21) zwischen dem genannten Trichter (8) und dem genannten Tansportband (1) zum seitlichen Einfüllen des genannten Austragsprodukts in die genannten Fördertaschen (20) vorgesehen ist, wobei die genannten Stellmittel aus wenigstens einem stufenlos vor den genannten Fördertaschen verschiebbaren Schott (3) bestehen.

3. Volumetrische Dosiervorrichtung nach zumindest einem der vorangehenden Ansprüche 1 oder 2, **dadurch gekennzeichnet,** daß mehrere Auslauföffnungen (9) nach solchem Transportband (1) zur Verteilung von eindosierten Einzelmengen des Austragsprodukts vorgesehen sind.

4. Volumetrische Dosiervorrichtung nach zumindest einem der vorangehenden Ansprüche von 1 bis 3, **dadurch gekennzeichnet,** daß das genannte Schott (3) durch eine Regelstange (4), welche durch einen Schraubknopf betätigt wird, einstellbar ist.

5. Volumetrische Dosiervorrichtung nach zumindest einem der vorangehenden Ansprüche von 1 bis 4, **dadurch gekennzeichnet,** daß das genannte endlose Transportband (1) durch ein Rollenpaar (5, 6) angetrieben ist, wobei zumindest eine von den genannten Rollen durch eine Welle (2) und ein Kegelräderpaar (7) angetrieben ist.

fig.2

fig.1

fig.3